# EUROPEAN PATENT APPLICATION

(11) **EP 1 752 683 A1**
(43) Date of publication of application: **14.02.2007**
(21) Application number: 05730428.9
(22) Date of filing: 13.04.2005
(51) Int. Cl.: F16F 15/02

(54) **VIBRATION REDUCING AND CONNECTING STRUCTURE**

(30) Priority: 21.04.2004 JP 2004125929
(71) Applicant: KABUSHIKI KAISHA KOBE SEIKO SHO, Kobe-shi, Hyogo 651-8585 (CH)
(72) Inventor: YAMAGUCHI, Zenzo K.K. Kobe Seiko Sho, Kobe-shi Hyogo 6512271 (JP); SUGIMOTO, Akio K.K. Kobe Seiko Sho, Kobe-shi Hyogo 6512271 (JP)
(74) Representative: Charlton, Peter John
(86) International application number: PCT/JP2005/007143
(87) International publication number: WO 2005/103524

(57) **Abstract**

A vibration-reducing connection structure that can significantly reduce forced vibration at a specific frequency is provided. A vibration-reducing connection structure 1, which inhibits transmission of forced vibration from a main structural object 10 to a sub structural object 11, includes a plurality of elastic bodies 2 that connect the sub structural object 11 to the main structural object 10 at connection sections 2a, and dynamic vibration absorbers 3 including springs 31 and weights 32. The springs 31 are connected to the sub structural object 11 at connection points 3a, which are substantially aligned with the connection sections 2a. Each spring 31 has one end connected to the corresponding connection point 3a. The weights 32 are attached to free ends of the springs 31.

## Description

### Technical Field

The present invention relates to a vibration-reducing connection structure that can reduce forced vibration at a specific frequency transmitted to a sub-structural object, serving as a bracket, base, a cover, etc., attached to a main structural object, such as a main body of a machine.

### Background Art

A vibration occurring in a main structural object, such as a main body of a machine, is transmitted to a sub-structural object attached to the main structural object with a connection member therebetween, thus creating noise from the sub-structural object. The following are conventional means for reducing vibration.
(1) Attaching a damping material to the sub-structural object.
(2) Attaching the sub-structural object to the main structural object with an elastic body therebetween, such as rubber or metallic spring, so that the elastic body blocks off the vibration of the main structural object.
(3) Attaching a dynamic vibration absorber, which includes a weight and a spring, to the sub-structural object.
(4) Combining means (2) and means (3).

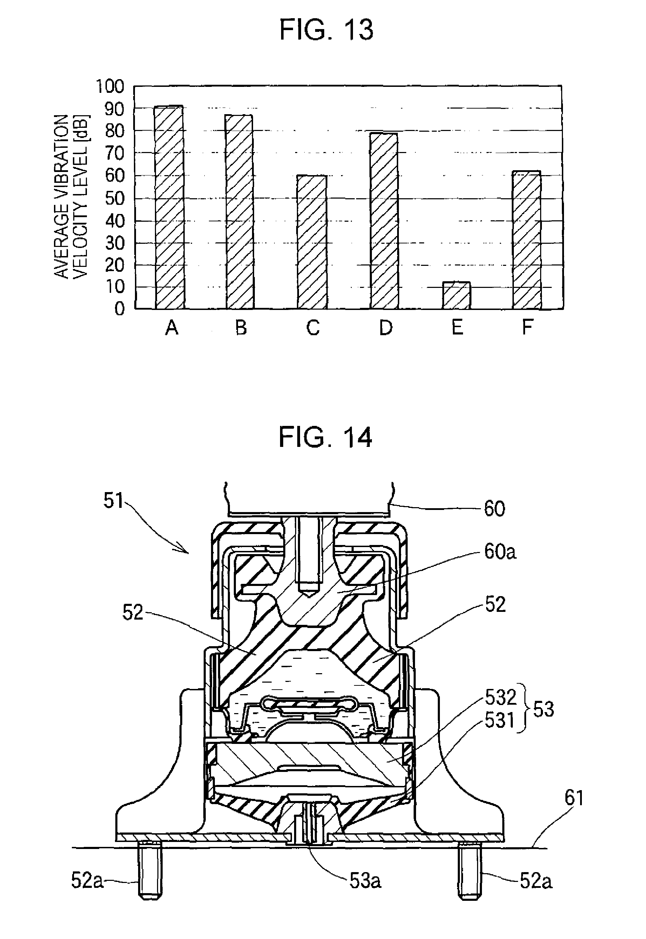

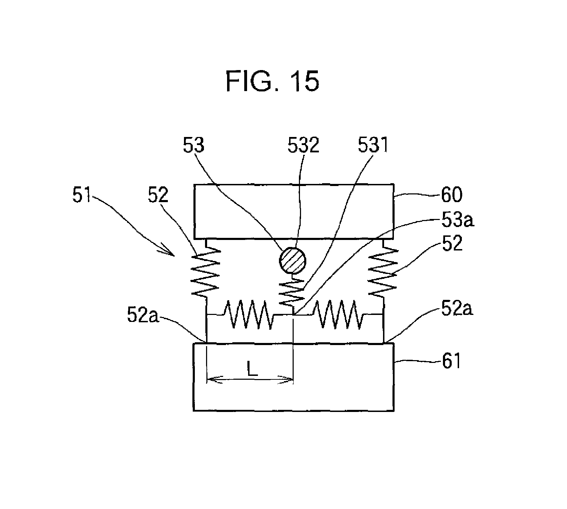

Means (1) to means (3) each have the following characteristics. Specifically, although means (1) is effective against resonant vibration, it is not effective against vibration of a frequency other than a resonant frequency. Means (2) can reduce vibration in a wide frequency range, but in order to achieve a significant effect, the elastic body needs to be made flexible. This is problematic in that it cannot be applied if the sub-structural object is heavy. Means (3) is effective against resonance at a specific frequency in a case (3-1) where the spring has high damping characteristics, and is effective against forced vibration at a specific frequency in a case (3-2) where the spring has low damping characteristics. A vibration isolator having a combination of means (2) and means (3) is known. A vibration isolator of this conventional example will be described below with reference to a cross-sectional view of Fig. 14 and a schematic model diagram of Fig. 15.

Reference numeral 51 in Fig. 14 denotes a vibration isolator, which has the following configuration. Specifically, a main structural object 60, which is a vibratory source, is supported by an elastic body 52 with an attachment member 60a therebetween. The elastic body 52 is joined to a sub-structural object 61, to which vibration is to be transmitted, at connection sections 52a, 52a. A dynamic vibration absorber 53, which includes a spring 531 and a weight 532, is disposed at a connection point 53a located at an intermediate position between the connection sections 52a, 52a. According to the vibration isolator 51 of this conventional example, the elastic suspension and the dynamic vibration absorber 53 are combined so as to achieve a vibration reducing effect both against vibration in a wide frequency range and against vibration at a specific frequency. A modeled version of the vibration isolator 51 according to the conventional example is shown in the schematic model diagram of Fig. 15.

When vibration of the main structural object generated in response to, for example, a motor rotating at a constant number of revolution is transmitted to the sub-structural object, a vibration at a specific frequency due to forced vibration dominates a vibration caused by resonance. In that case, it is considered that case 3-2 in means (3) is suitable, and the following results were obtained after conducting a study on the attachment position of the dynamic vibration absorber.
a. The attachment position of the dynamic vibration absorber is preferably consistent with the attachment position of the elastic body. In the case of the vibration isolator of the conventional example, each of the connection sections 52a for the sub-structural object 61 is separated from the connection point 53a for the dynamic vibration absorber 53 by a distance L as shown in Figs. 14 and 15. Thus, the portion corresponding to the separated distance L between each connection section 52a and the connection point 53a undesirably functions as a spring, which prevents the dynamic vibration absorber from sufficiently exhibiting its function. In other words, such an undesirable spring unfavorably reduces the effect of the elastic suspension that is related to the function of the dynamic vibration absorber, thus lowering the function of the dynamic vibration absorber for reducing the vibration transmitted to the sub-structural object.
b. The higher the point mobility (vibration applied per unit force) at the attachment position of the dynamic vibration absorber, the greater the effect.
c. The lower the damping characteristics of the dynamic vibration absorber, the greater the effect.

According to the above, the combination of the elastic suspension and the dynamic vibration absorber achieves a vibration reducing effect both against vibration in a wide frequency range and against vibration at a specific frequency. However, in view of the following points, the effect is insufficient when vibration of the main structural object generated in response to, for example, a motor rotating at a constant number of revolution is transmitted to the sub-structural object. Specifically, although the axes of the elastic suspension and the weight and spring of the dynamic vibration absorber are linearly arranged, the dynamic vibration absorber is not attached to the attachment position of an object to be isolated from vibration. Thus, the item a is not satisfied. In other words, the attachment position of the dynamic vibration absorber and the attachment position of the elastic body can be considered as being substantially aligned with each other only when the connection section and the connection point have the same vibrational amplitude and the same phase. Furthermore, since it is stated that the spring included in the dynamic vibration absorber is preferably given high damping characteristics, the item c is not satisfied. Moreover, there are no descriptions with regard to the point mobility at the attachment position of the dynamic vibration absorber as written above in item b. Accordingly, this implies that a significant reducing effect against vibration at a specific frequency cannot be achieved.

Accordingly, it is an object of the present invention to provide a vibration-reducing connection structure that can significantly reduce forced vibration at a specific frequency.

### Disclosure of Invention

The present invention achieves the aforementioned object by providing a vibration-reducing connection structure according to Claim 1 of the invention. Specifically, the vibration-reducing connection structure includes a main structural object, a sub-structural object connected to the main structural object with an elastic body disposed therebetween, a spring disposed at a connection point which is substantially aligned with a connection section between the sub-structural object and the elastic body, and a weight provided by means of the spring.

According to the vibration-reducing connection structure set forth in Claim 2 of the invention, in the vibration-reducing connection structure of Claim 1, the spring may be disposed on a surface of the sub-structural object that is opposite to a surface thereof to which the elastic body is connected.

According to the vibration-reducing connection structure set forth in Claim 3 of the invention, in the vibration-reducing connection structure of Claim 1, the spring may be disposed on a surface of the sub-structural object, which is the same surface to which the elastic body is connected.

According to the vibration-reducing connection structure set forth in Claim 4 of the invention, in the vibration-reducing connection structure of any one of Claims 1 to 3, the spring may be formed by machining the sub-structural object.

According to the vibration-reducing connection structure set forth in Claim 5 of the invention, in the vibration-reducing connection structure of any one of Claims 1 to 3, the elastic body may be formed by machining the sub-structural object.

According to the vibration-reducing connection structure set forth in Claim 6 of the invention, in the vibration-reducing connection structure of any one of Claims 1 to 3, the spring and the elastic body may be formed by machining the sub-structural object.

According to the vibration-reducing connection structure set forth in Claim 7 of the invention, in the vibration-reducing connection structure of any one of Claims 1 to 3, the elastic body may be formed by machining the main structural object.

According to the vibration-reducing connection structure set forth in Claim 8 of the invention, in the vibration-reducing connection structure of any one of Claims 1 to 3, the spring and the elastic body may be formed by machining the main structural object.

### Brief Description of the Drawings

Fig. 1 is a schematic model diagram of a vibration-reducing connection structure according to an exemplary embodiment of the present invention.
Fig. 2 is a schematic diagram of a vibration-reducing connection structure according to a first embodiment of the present invention.
Fig. 3 is a schematic diagram of a vibration-reducing connection structure according to a second embodiment of the present invention.
Fig. 4 is a schematic diagram of a vibration-reducing connection structure according to a third embodiment of the present invention.
Fig. 5 is a schematic diagram of a vibration-reducing connection structure according to a fourth embodiment of the present invention.
Fig. 6 is a schematic diagram of a vibration-reducing connection structure according to a fifth embodiment of the present invention.
Fig. 7 is a schematic diagram of a vibration-reducing connection structure according to a sixth embodiment of the present invention.
Fig. 8 is a schematic diagram of a vibration-reducing connection structure according to a seventh embodiment of the present invention.
Fig. 9 is a schematic diagram of a vibration-reducing connection structure according to an eighth embodiment of the present invention.
Fig. 10 is a schematic diagram of a vibration-reducing connection structure according to a ninth embodiment of the present invention.
Fig. 11 is a schematic diagram of a vibration-reducing connection structure according to a tenth embodiment of the present invention.
Fig. 12 is a schematic diagram of a vibration-reducing connection structure according to an eleventh embodiment of the present invention.
Fig. 13 is a graph which relates to the vibration-reducing connection structure according to the present invention, in which the vertical axis represents the average vibration level (dB) of a sub-structural object and the horizontal axis represents vibration-reducing means (A to F).
Fig. 14 is a cross-sectional view of a vibration isolator according to a conventional example.
Fig. 15 is a schematic model diagram of the vibration isolator according to the conventional example.

### Best Mode for Carrying Out the Invention

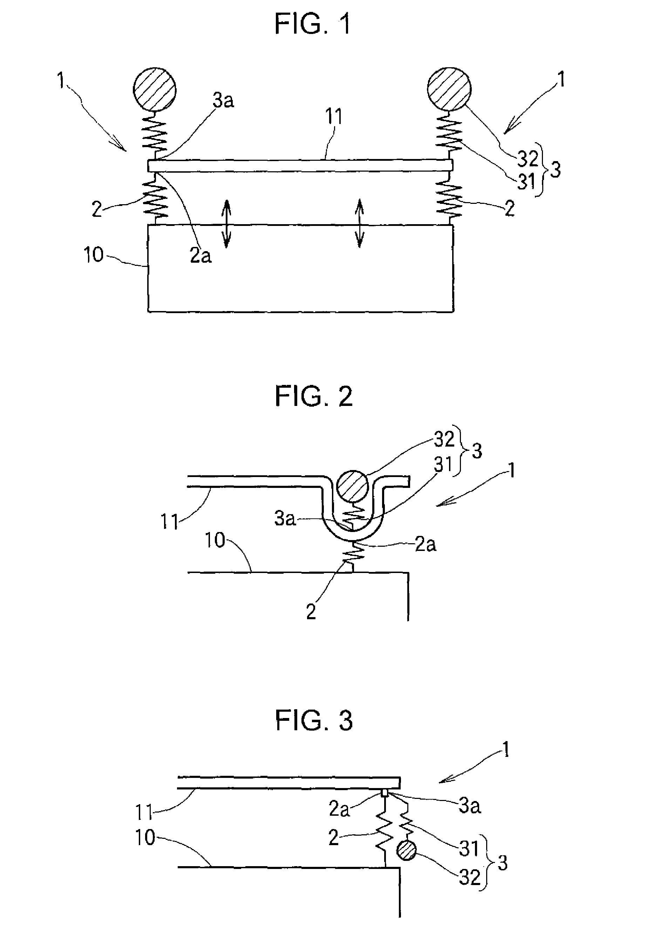

A vibration-reducing connection structure according to an exemplary embodiment of the present invention will be described first with reference to a schematic model diagram of Fig. 1. Attachment positions (which will be referred to as "connection points" hereinafter) of dynamic vibration absorbers (corresponding to springs and weights in the present invention) are considered as being substantially aligned with attachment positions (which will be referred to as "connection sections" hereinafter) of elastic bodies when the connection sections and the connection points have the same vibrational amplitude and the same phase. However, a slight positional disagreement between the connection sections and the connection points is permissible. Furthermore, the springs of the dynamic vibration absorbers preferably have low damping characteristics. As the damping characteristics of the springs, tanδ is preferably 0.05 or lower. As an example of a material with low damping characteristics, metal or rigid plastic may be used.

Reference numeral 10 in Fig. 1 denotes a main structural object that vibrates. According to a vibration-reducing connection structure 1, the main structural object 10 has a sub-structural object 11 connected thereto at connection sections 2a where the point mobility is high. The vibration-reducing connection structure 1 includes a plurality of elastic bodies 2 (two of which are shown in Fig. 1) for connecting the sub-structural object 11 at the connection sections 2a where the point mobility is high, and dynamic vibration absorbers 3 including springs 31 and weights 32. The springs 31 are connected to the sub-structural object 11 at connection points 3a, which are substantially aligned with the connection sections 2a. The connection points 3a are positions where action forces are exerted individually to the plurality of elastic bodies 2, or in other words, where action forces are exerted towards the center of the elastic bodies 2. The weights 32 are attached to free ends of the corresponding springs 31.

### (First Embodiment)

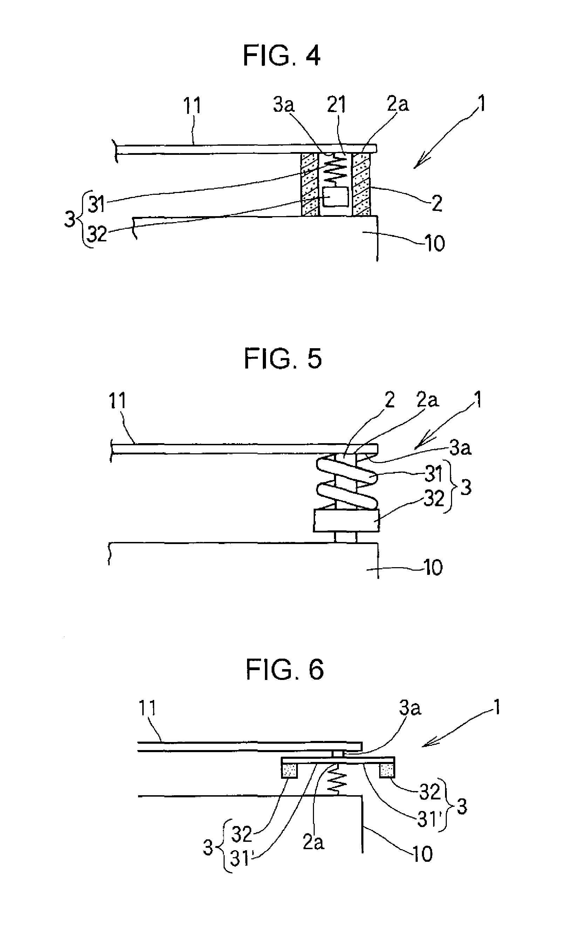

A vibration-reducing connection structure 1 according to a first embodiment (corresponding to Claim 1) of the present invention will be described in detail with reference to a schematic diagram of Fig. 2. The description below is directed to one side of a bilaterally symmetrical structure, and therefore, the description and illustration of the other side thereof are omitted below.

The vibration-reducing connection structure 1 according to the first embodiment of the present invention includes the elastic body 2 that connects the sub-structural object 11 to the main structural object 10 at the connection section 2a where the point mobility is high. For the elastic body 2, a coil spring, a helical spring, a volute spring, a disc spring, a foamed body, rubber, or resin, for example, may be used. The sub-structural object 11 has a depression that is depressed downward so that the upper side of the depression is open. The underside of a downward protruding portion of the depression defines the connection section 2a. The dynamic vibration absorber 3 is attached to the sub-structural object 11 while being disposed within the depression. The dynamic vibration absorber 3 includes the spring 31 connected to the sub-structural object 11 at the connection point 3a, which is substantially aligned with the connection section 2a, and the weight 32 attached to the free end of the spring 31. This is advantageous in terms of good design and appearance since the dynamic vibration absorber 3 is disposed within the depression.

To describe the vibration-reducing connection structure 1 according to the first embodiment briefly, the dynamic vibration absorbers 3 are attached to the attachment positions of the sub-structural object 11 to be isolated from vibration, and the dynamic vibration absorbers 3 include the coil springs 31 so that the damping characteristics can be lowered readily. In addition, because the sub-structural object 11 is attached to the main structural object 10 with the plurality of elastic bodies 2 at the connection sections 2a where the point mobility is high, a vibration of the sub-structural object 11 can be effectively reduced.

### (Second Embodiment)

A vibration-reducing connection structure 1 according to a second embodiment (corresponding to Claim 2) of the present invention will be described with reference to a schematic diagram of Fig. 3. Specifically, the vibration-reducing connection structure 1 according to the second embodiment of the present invention includes the elastic body 2 that connects the sub-structural object 11 to the main structural object 10 at the connection section 2a where the point mobility is high. The dynamic vibration absorber 3 is attached to the undersurface of the sub-structural object 11 at the connection point 3a, which is substantially aligned with the connection section 2a. The dynamic vibration absorber 3 includes the spring 31 fixed to the connection point 3a and the weight 32 attached to the free end of the spring 31.

In the vibration-reducing connection structure according to the first embodiment, the dynamic vibration absorber 3 is disposed above the sub-structural object 11. On the other hand, the vibration-reducing connection structure 1 according to the second embodiment of the present invention is different from that of the first embodiment only in that the dynamic vibration absorber 3 is disposed below the sub-structural object 11. Since the connection section 2a and the connection point 3a are substantially aligned with each other, the vibration-reducing connection structure 1 according to the second embodiment of the present invention achieves a vibration reducing effect that is similar to that achieved by the vibration-reducing connection structure according to the first embodiment.

### (Third Embodiment)

A vibration-reducing connection structure 1 according to a third embodiment (corresponding to Claim 2) of the present invention will be described in detail with reference to a schematic diagram of Fig. 4. Specifically, the vibration-reducing connection structure 1 according to the third embodiment includes an elastic body 2 that connects the sub-structural object 11 to the main structural object 10 at the connection section 2a where the point mobility is high. The elastic body 2 is composed of vibration-proof rubber and has a hollow section 21 at the center thereof so as to form a tubular shape. The dynamic vibration absorber 3 is housed within the hollow section 21. The dynamic vibration absorber 3 includes the coil spring 31 whose one end is joined to the undersurface of the sub-structural object 11 at the connection point 3a, and the weight 32 attached to a free lower end of the coil spring 31. In the third embodiment, the main structural object 10 may have a depression on the top surface thereof. Thus, the weight 32 and the spring 31 may be partially disposed within the depression. Although the elastic body 2 is composed of vibration-proof rubber formed into a tubular shape, the elastic body 2 may alternatively be defined by a coil spring.

In the vibration-reducing connection structure 1 according to the third embodiment, the dynamic vibration absorber 3 is attached to the sub-structural object 11 at the connection point 3a substantially aligned with the connection section 2a, and the dynamic vibration absorber 3 includes the coil spring 31 so that the damping characteristics can be lowered readily. In addition, the sub-structural object 11 is attached to the main structural object 10 with the plurality of elastic bodies 2 at the connection sections 2a where the point mobility is high. Accordingly, a vibration reducing effect that is similar to that achieved by the vibration-reducing connection structure according to the first embodiment is attained.

### (Fourth Embodiment)

A vibration-reducing connection structure 1 according to a fourth embodiment (corresponding to Claim 2) of the present invention will be described with reference to a schematic diagram of Fig. 5. Specifically, the vibration-reducing connection structure 1 according to the third embodiment of the present invention includes a columnar elastic body 2 that connects the sub-structural object 11 to the main structural object 10 at the connection section 2a where the point mobility is high. The elastic body 2 is composed of vibration-proof rubber. The dynamic vibration absorber 3 is attached to the undersurface of the sub-structural object 11 while embracing the elastic body 2. The dynamic vibration absorber 3 includes the coil spring 31 and the weight 32. The coil spring 31 has one of its ends fixed to the undersurface of the sub-structural object 11 and has the elastic body 2 extending through the center thereof. The weight 32 is attached to an end of the coil spring 31, that is, a free lower end thereof, and has an annular shape such that the elastic body 2 extends through the center of the weight 32. Although the connection section 2a and the connection point 3a are not aligned with each other in the fourth embodiment, since the positional disagreement therebetween is considered as being within a range in which the two have the same vibrational amplitude and the same phase, an effect caused by the positional disagreement can be ignored.

### (Fifth Embodiment)

A vibration-reducing connection structure 1 according to a fifth embodiment (corresponding to Claim 2) of the present invention will be described with reference to a schematic diagram of Fig. 6. Specifically, the vibration-reducing connection structure 1 according to the fifth embodiment of the present invention includes a columnar elastic body 2 that connects the sub-structural object 11 to the main structural object 10 at the connection section 2a where the point mobility is high. The elastic body 2 is defined by a coil spring. An upper end of the elastic body 2 is attached to the undersurface of the sub-structural object 11 at the connection point 3a via the dynamic vibration absorber 3. The dynamic vibration absorber 3 includes a leaf spring 31' whose central portion in the longitudinal direction thereof is fixed to the upper end of the elastic body 2, and weights 32 fixed to the upper sides of opposite longitudinal ends of the leaf spring 31'. According to the fifth embodiment, since the connection section 2a and the connection point 3a are substantially aligned with each other, a vibration reducing effect that is similar to that achieved by the vibration-reducing connection structure according to the first embodiment is attained.

### (Sixth Embodiment)

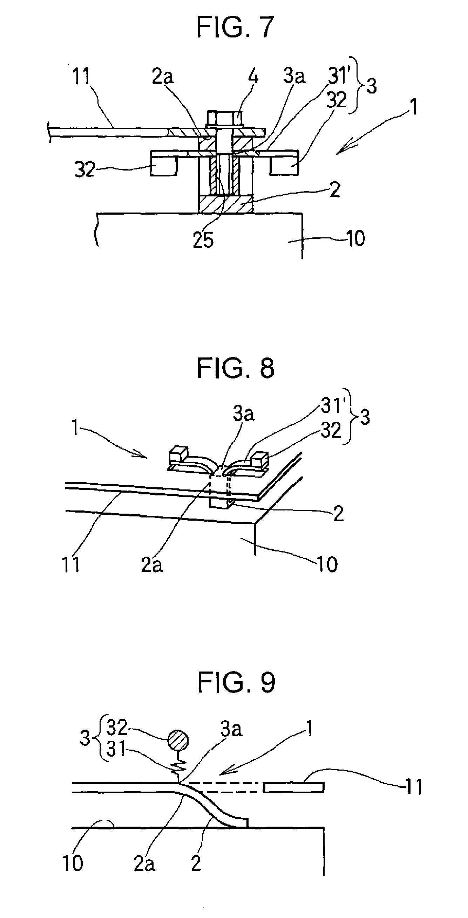

A vibration-reducing connection structure 1 according to a sixth embodiment (corresponding to Claim 2) of the present invention will be described with reference to a schematic diagram of Fig. 7. Specifically, the vibration-reducing connection structure 1 according to the sixth embodiment includes an elastic body 2 that connects the sub-structural object 11 to the main structural object 10 at the connection section 2a where the point mobility is high. The elastic body 2 is fixed to the main structural object 10 and has an internal thread 25 at an upper portion thereof. An attachment screw 4 is screwed into the internal thread 25 so that the sub-structural object 11 is attached to the main structural object 10. An attaching portion of the attachment screw 4 corresponds to the connection point 3a, which is substantially aligned with the connection section 2a between the sub-structural object 11 and the elastic body for the sub-structural object. This attaching portion has the dynamic vibration absorber 3 attached thereto. The dynamic vibration absorber 3 includes the leaf spring 31' whose central portion in the longitudinal direction thereof is supported by the attachment screw 4, and the weights 32 attached to lower sides of opposite ends of the leaf spring 31'.

In the vibration-reducing connection structure 1 according to the sixth embodiment, the dynamic vibration absorber 3 is attached to the attachment position of the sub-structural object 11, and the dynamic vibration absorber 3 includes the leaf spring 31' so that the damping characteristics can be lowered readily. In addition, the sub-structural object 11 is attached to the main structural object 10 with the plurality of elastic bodies 2 at the connection sections 2a where the point mobility is high. Accordingly, a vibration reducing effect that is similar to that achieved by the vibration-reducing connection structure according to the first embodiment is attained.

### (Seventh Embodiment)

A vibration-reducing connection structure 1 according to a seventh embodiment (corresponding to Claim 3) of the present invention will be described with reference to a schematic diagram of Fig. 8. Specifically, the vibration-reducing connection structure 1 according to the seventh embodiment includes an elastic body 2 that connects the sub-structural object 11 to the main structural object 10 at the connection section 2a where the point mobility is high. The elastic body 2 is fixed to the main structural object 10 and has its upper portion fixed to the sub-structural object 11 at the connection section 2a. The sub-structural object 11 has rectangularly incised segments on opposite sides of the connection section 2a. The base end sides of the incised segments proximate to the connection section 2a are raised and bent upward, and the free end sides thereof are shaped so as to extend horizontally. Thus, the incised segments define the leaf spring 31'. The upper sides of opposite ends of the leaf spring 31' have the weights 32 attached thereto so as to form the dynamic vibration absorber 3. Accordingly, since the lower side of the dynamic vibration absorber 3 at the central portion thereof serves as 2a, and the upper side thereof serves as the connection point, the vibration-reducing connection structure 1 according to the seventh embodiment achieves a vibration reducing effect that is similar to that achieved by the vibration-reducing connection structure according to the first embodiment.

### (Eighth Embodiment)

A vibration-reducing connection structure 1 according to an eighth embodiment (corresponding to Claim 4) of the present invention will be described with reference to a schematic diagram of Fig. 9. Specifically, the vibration-reducing connection structure 1 according to the eighth embodiment includes an elastic body 2 that connects the sub-structural object 11 to the main structural object 10 at the connection section 2a where the point mobility is high. The elastic body 2 is formed by incising a rectangular segment in the sub-structural object 11, bending the base end side of the segment downward so that the segment extends downward at an angle, and fixing the free end side of the segment to the main structural object 10. In other words, the elastic body 2 is part of the sub-structural object 11. The connection point 3a is positioned at an upper portion of the bent elastic body 2 and has the dynamic vibration absorber 3 disposed thereon. The dynamic vibration absorber 3 includes the spring 31 joined to the sub-structural object 11 at the connection point 3a, which is substantially aligned with the connection section 2a, and the weight 32 attached to the free end of the spring 31. Accordingly, since the connection section 2a and the connection point 3a are substantially aligned with each other, the vibration-reducing connection structure 1 according to the eighth embodiment achieves a vibration reducing effect that is similar to that achieved by the vibration-reducing connection structure according to the first embodiment.

### (Ninth Embodiment)

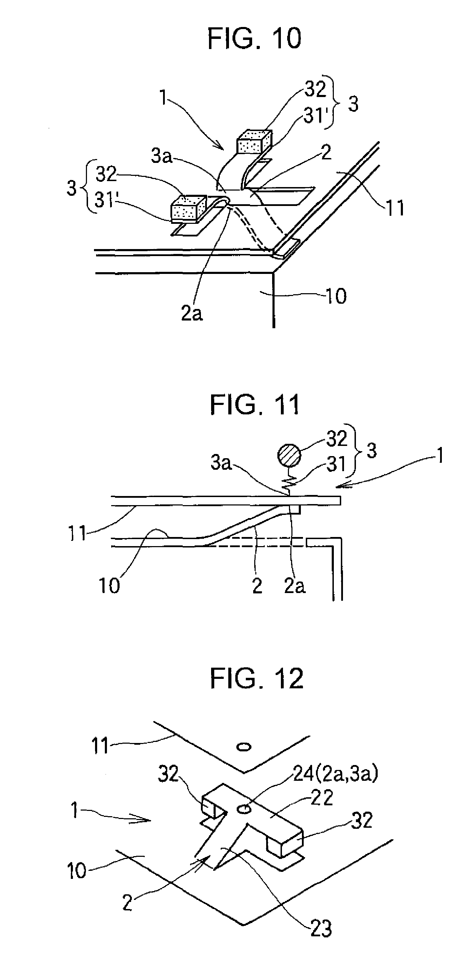

A vibration-reducing connection structure 1 according to a ninth embodiment (corresponding to Claim 5) of the present invention will be described with reference to a schematic diagram of Fig. 10. Specifically, the vibration-reducing connection structure 1 according to the seventh embodiment includes an elastic body 2 that connects the sub-structural object 11 to the main structural object 10 at the connection section 2a where the point mobility is high. The elastic body 2 is formed by incising a rectangular segment in the sub-structural object 11, bending the base end side of the segment downward so that the segment extends downward at an angle, and fixing the free end side of the segment to the main structural object 10. On the other hand, a leaf spring 31' is formed by incising rectangular segments in a direction perpendicular to the elastic body 2 at an upper end portion of the elastic body, raising and bending upward the base ends of the segments proximate to the connection section 2a, and then shaping the free end portions of the segments so that the free end portions extend horizontally. The upper sides of opposite ends of the leaf spring 31' have the weights 32 attached thereto so as to form the dynamic vibration absorber 3. In other words, the elastic body 2 and the leaf spring 31' of the dynamic vibration absorber 3 are both part of the sub-structural object 11. Accordingly, since the lower side of the dynamic vibration absorber 3 at the central portion thereof serves as 2a, and the upper side thereof serves as the connection point, the vibration-reducing connection structure 1 according to the ninth embodiment achieves a vibration reducing effect that is similar to that achieved by the vibration-reducing connection structure according to the first embodiment.

### (Tenth Embodiment)

A vibration-reducing connection structure 1 according to a tenth embodiment (corresponding to Claim 6) of the present invention will be described with reference to a schematic diagram of Fig. 11. Specifically, the vibration-reducing connection structure 1 according to the eighth embodiment includes an elastic body 2 that connects the sub-structural object 11 to the main structural object 10 at the connection section 2a where the point mobility is high. The elastic body 2 is formed by incising a rectangular segment in the main structural object 10, bending the base end side of the segment upward so that the segment extends upward at an angle, and fixing the free end side of the segment to the sub-structural object 11. In other words, the elastic body 2 is part of the main structural object 10. The connection point 3a is positioned at an upper portion of the bent elastic body 2 and has the dynamic vibration absorber 3 disposed thereon. The dynamic vibration absorber 3 includes the spring 31 joined to the sub-structural object 11 at the connection point 3a, which is substantially aligned with the connection section 2a, and the weight 32 attached to the free end of the spring 31. Accordingly, since the connection section 2a and the connection point 3a are substantially aligned with each other, the vibration-reducing connection structure 1 according to the tenth embodiment achieves a vibration reducing effect that is similar to that achieved by the vibration-reducing connection structure according to the first embodiment.

### (Eleventh Embodiment)

A vibration-reducing connection structure 1 according to an eleventh embodiment (corresponding to Claim 7) of the present invention will be described with reference to a schematic diagram of Fig. 12. Specifically, the vibration-reducing connection structure 1 according to the eleventh embodiment includes an elastic body 2 that connects the sub-structural object 11 to the main structural object 10 at a connection section where the point mobility is high. The elastic body 2 is defined by a leaf spring having a T-shape in plan view. The T-shaped leaf spring has a vertical segment 23 extending from the main structural object 10 and a horizontal segment 22 extending substantially horizontally across the top of the vertical segment 23. The vertical segment 23 of the elastic body 2 is valley-folded at the base end thereof, and is mountain-folded at a section thereof that is connected to the horizontal segment 22. The horizontal segment 22 has an attachment hole 24 used for attaching the sub-structural object 11 to a flat portion of the horizontal segment 22. The elastic body 2 has the weights 32 attached to the lower sides of opposite ends of the horizontal segment 22. In other words, according to the third embodiment, the horizontal segment 22 of the elastic body 2 corresponds to the spring 31 in the vibration-reducing connection structure according to the first or second embodiment, which implies that the dynamic vibration absorber is defined by the horizontal segment 22 of the elastic body 2 and the weights 32, 32. Furthermore, in the vibration-reducing connection structure 1 according to the third embodiment, the attachment hole 24 serves both as a connection section and a connection point.

In the vibration-reducing connection structure 1 according to the eleventh embodiment, the dynamic vibration absorber is attached to the attachment position of the sub-structural object 11, and moreover, the dynamic vibration absorber utilizes a segment of the T-shaped elastic body 2 as a leaf spring so that the damping characteristics can be lowered readily. In addition, the sub-structural object 11 is attached to the main structural object 10 with the plurality of elastic bodies 2 at connection sections where the point mobility is high. Accordingly, a vibration reducing effect that is similar to that achieved by the vibration-reducing connection structure according to the first embodiment is attained.

Although the types of elastic bodies and the types of springs used for the dynamic vibration absorbers are mentioned in the first to eleventh embodiments of the present invention, the types of elastic bodies and the types of springs are not limited to the above. For each elastic body, any type of material that has elasticity may be used, such as a coil spring, a helical spring, a volute spring, a disc spring, a leaf spring, a foamed body, rubber, and resin. The springs for the dynamic vibration absorbers may each be a coil spring, a helical spring, a volute spring, a disc spring, a leaf spring, or a rod-like spring having any cross-sectional shape, which are composed of a material having low damping characteristics, such as metal and plastic. Moreover, each spring may have weights attached to opposite ends thereof. In any of these types of springs, the springs preferably satisfy the condition tanδ < 0.5. Embodiments

The embodiments of the vibration-reducing connection structure according to the present invention will be described with reference to a graph shown in Fig. 13, in which the vertical axis represents the average vibration level (dB) of the sub-structural object and the horizontal axis represents vibration-reducing means (A to F). Average vibration levels with respect to the vibration-reducing means A to F on the horizontal axis in Fig. 6 are determined from calculation and correspond to the following cases. An average vibration level of case E that corresponds to the vibration-reducing connection structure according to the present invention is determined from calculation based on the configuration shown in Fig. 1.
Case A: The main structural object and the sub-structural object are rigidly attached to each other (without the use of a vibration-reducing connection structure).
Case B: The sub-structural object is supported using an elastic suspension.
Case C: The dynamic vibration absorbers are attached to attachment sections.
Case D: The damping characteristics of the dynamic vibration absorbers in case C are increased by ten times.
Case E: The present invention is applied.
Case F: The vibration isolator shown in Figs. 14 and 15 is used.

Referring to Fig. 13, in a case where the main structural object vibrates at a specific frequency, the degree of vibration reducing effect on the sub-structural object is greater when the damping characteristics are lower rather than higher. This proves that the present invention achieves the most advantageous vibration reducing effect. Industrial Applicability

The vibration-reducing connection structure according to the present invention effectively reduces vibration at a specific frequency transmitted to a sub-structural object, serving as a bracket, a base, a cover, etc., attached to a main structural object, such as a main body of a machine. Accordingly, the vibration-reducing connection structure of the present invention can be utilized for reducing environmental noise at worksites and indoors, thereby contributing to improvements in residential environment and work environment.

## Claims

1. A vibration-reducing connection structure comprising a main structural object; a sub-structural object connected to the main structural object with an elastic body disposed therebetween; a spring disposed at a connection point which is substantially aligned with a connection section between the sub-structural object and the elastic body; and a weight provided by means of the spring.

2. The vibration-reducing connection structure according to Claim 1, wherein the spring is disposed on a surface of the sub-structural object that is opposite to a surface thereof to which the elastic body is connected.

3. The vibration-reducing connection structure according to Claim 1, wherein the spring is disposed on a surface of the sub-structural object, which is the same surface to which the elastic body is connected.

4. The vibration-reducing connection structure according to any one of Claims 1 to 3, wherein the spring is formed by machining the sub-structural object.

5. The vibration-reducing connection structure according to any one of Claims 1 to 3, wherein the elastic body is formed by machining the sub-structural object.

6. The vibration-reducing connection structure according to any one of Claims 1 to 3, wherein the spring and the elastic body are formed by machining the sub-structural object.

7. The vibration-reducing connection structure according to any one of Claims 1 to 3, wherein the elastic body is formed by machining the main structural object.

8. The vibration-reducing connection structure according to any one of Claims 1 to 3, wherein the spring and the elastic body are formed by machining the main structural object.
